# EUROPÄISCHE PATENTSCHRIFT

(11) **EP 1 245 478 B1**
(45) Veröffentlichungstag und Bekanntmachung des Hinweises auf die Patenterteilung: **05.10.2005**
(21) Anmeldenummer: 01107636.1
(22) Anmeldetag: 28.03.2001
(51) Int. Cl.: B62D 29/04, B60J 7/04, B29C 43/18

(54) **Karosserie-Aussenteil für ein Fahrzeug**
External body part for automobile
Elément extérieur d'une carrosserie d'automobile

(43) Veröffentlichungstag der Anmeldung: 02.10.2002
(73) Patentinhaber: Webasto AG, 82131 Stockdorf (DE); Basf AG, 67056 Ludwigshafen (DE)
(72) Erfinder: Birkner, Joachim, 82178 Puchheim (DE); Elbs, Norbert, 80797 München (DE); Ogris, Gottfried, 85716 Unterschleissheim (DE)
(74) Vertreter: Wiese, Gerhard

(56) Entgegenhaltungen:
- EP-A- 0 995 667
- EP-A- 1 080 969
- WO-A-99/14101
- DE-A- 1 680 071
- DE-A- 19 531 598
- DE-A- 19 935 651
- DE-C- 19 739 386
- GB-A- 2 311 966
- US-A- 4 943 680

## Beschreibung

Die vorliegende Erfindung betrifft ein Karosserie-Außenteil für ein Fahrzeug gemäß dem Oberbegriff des Patentanspruchs 1.

Ein gattungsgemäßes Karosserie-Außenteil für ein Fahrzeug ist aus der EP 0 995 667 A1 bekannt. Dieses wird von einer durch Tiefziehen hergestellten Außenhaut, einer auf diese aufgeschäumten Kunsstoffschicht und einem daran nach innen dekorativen Flächengebilde gebildet. Die Steifigkeit und Tragfähigkeit eines solchen Verbundbauteils ist sehr beschränkt.

Ein weiteres Karosserie-Außenteil für ein Fahrzeug ist aus der DE 1 680 071 A bekannt, wobei es sich um einen Kunststoffdeckel für ein Schiebedach handelt, der aus zwei flächig gegeneinander angeordneten Kunststoffformteilen besteht, die mittels eines Verbindungswerkstoffes, z.B. eines Klebers oder Schaumes, miteinander fest verbunden sind. Das untere Formteil ist dabei durch Rippen, insbesondere Hohlrippen, verstärkt. Das obere Formteil kann aus Polyester und das untere Formteil aus Polycarbonat bestehen.

Aus der DE 197 39 386 C1 ist ein zweischaliger Deckel für ein Fahrzeugdach bekannt, welcher ein Oberteil aus Kunststoff und ein Unterteil aus Blech umfasst, welche über ein Verriegelungsorgan miteinander verbunden sind, wobei zwischen dem Kunststoffteil und dem Blechteil ein Hohlraum ausgebildet ist.

Aus der DE 197 08 369 C1 ist ein Deckel eines öffnungsfähigen Fahrzeugdaches bekannt, welcher aus einem Deckelaußenblech und einem unterhalb desselben angeordneten Deckelinnenblech besteht, die im Randbereich fest miteinander verbunden sind, wobei zwischen dem Deckelaußenblech und dem Deckelinnenblech ein Hohlraum ausgebildet ist. Ähnlich ausgebildete Dachlamellen sind aus der DE 41 29 860 C1 bekannt.

Es ist Aufgabe der vorliegenden Erfindung, ein Karosserie-Außenteil für ein Fahrzeug zu schaffen, welches kostengünstig hergestellt werden kann, in einfacher Weise für spezifische Funktionsanforderungen optimierbar ist und ein geringes Gewicht, aber dennoch die erforderliche Festigkeit aufweist.

Diese Aufgabe wird erfindungsgemäß gelöst durch ein Karosserie-Außenteil für ein Fahrzeug gemäß Anspruch 1.

Bei dieser Lösung ist vorteilhaft, dass das Oberteil und das Unterteil durch die Kunststoffbauweise mit relativ geringem Gewicht, aber hoher Festigkeit in einfacher Weise gefertigt werden können, wobei durch entsprechende Formgestaltung eine Funktionsintegration möglich ist, was zur Einsparung zusätzlicher Teile führt, sowie dass durch die Verwendung einer hinterspritzten, hinterschäumten oder hinterpressten Folie auf eine Lackierung des die Folie aufweisenden Teils verzichtet werden kann, was zu Kosteneinsparungen führt. Durch den zwischen Oberteil und Unterteil eingeschlossenen Hohlraum entsteht dabei ein Sandwich-Bauteil mit hoher Festigkeit.

Bevorzugte Ausgestaltungen der Erfindung ergeben sich aus den Unteransprüchen.

Im folgenden wird die Erfindung anhand der beigefügten Zeichnungen beispielhaft näher erläutert. Es zeigen:
- Fig. 1: eine Querschnittansicht eines erfindungsgemäßen Dachelements; und
- Fig. 2: eine gegenüber Fig. 1 vergrößert dargestellte Darstellung des Kontaktbereichs zwischen zwei Dachelementen.

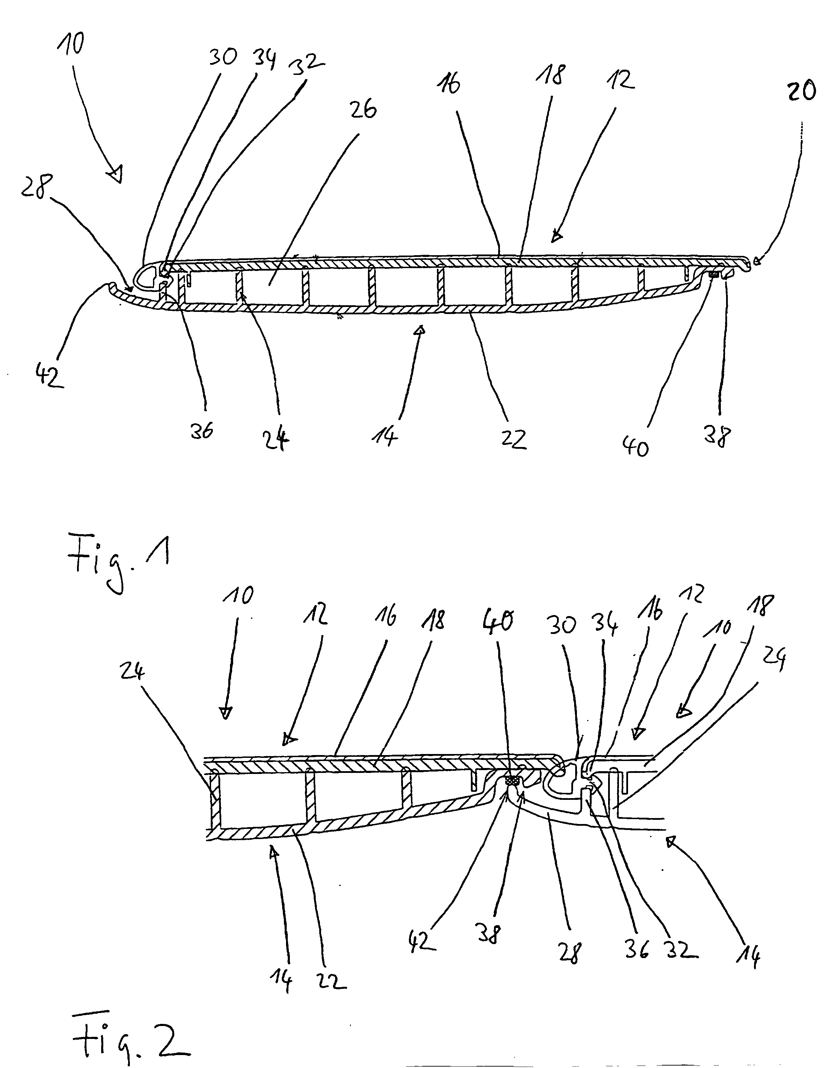

In Fig. 1 ist ein Dachelement 10 gezeigt, bei dem es sich um einen Deckel eines öffnungsfähigen Fahrzeugdaches, wie beispielsweise eines Schiebedaches, Schiebehebedaches oder Spoilerdaches, oder um eine Lamelle eines Lamellendaches handeln kann. Das Dachelement umfasst eine auf der Fahrzeugaußenseite liegende Oberschale 12 sowie eine auf der Fahrzeuginnenseite liegende Unterschale 14. Die Oberschale 12 besteht aus einer Folie 16, die mit einem Verstärkungsmaterial 18 hinterspritzt ist. Das Hinterspritzen von Folien für Fahrzeugkarosserieteile ist beispielsweise in X. Hopfenspirger et al., "Kunststoff-Außenteile sind integrierbar", Sonderdruck aus der Zeitschrift "Kunststoffe plast europe", 88. Jahrgang, 1998, Heft 10, oder Grefenstein, "Folienhinterspritzen statt Lackieren", Sonderdruck der Zeitschrift mo Beschichten von Kunststoff und Metall, Heft 10, 1999, beschrieben. Dabei wird die Folie extrudiert, unter Wärmeeinrichtung verformt und schließlich in ein Werkzeug eingebracht, in welchem sie mit einem geeigneten Verstärkungsmaterial hinterspritzt wird.

Die Folie 16 kann mehrschichtig ausgebildet sein, wobei eine Deckschicht, eine Farbschicht und eine Folienträgerschicht vorgesehen sein können, wobei die Deckschicht, die aus PMMA bzw. Plexiglas transparent ausgebildet sein kann, für die nötige Kratzfestigkeit, Härte, Witterungsbeständigkeit sowie den nötigen Glanz sorgt, die Farbschicht, die ebenfalls aus PMMA bestehen kann, eingefärbt ist, um für eine gewünschte Färbung bzw. Effekteinfärbung (Metallic, Flitter etc.) zu sorgen, und die Trägerschicht, die beispielsweise aus ASA oder ASA/PC bestehen kann, für eine gewünschte Färbung sowie für die Haftung zum Hinterspritzmaterial bzw. Verstärkungsmaterial 18 sorgen kann. Die Folienschichten können auch für eine Verbesserung der UV-Beständigkeit vorgesehen sein. Wenn die Folienträgerschicht eingefärbt ist, kann auch auf die Farbschicht verzichtet werden. Die einzelnen Folienschichten werden bei der Herstellung der Folie vorzugsweise koextrudiert.

Das hinterspritzte Verstärkungsmaterial kann beispielsweise ASA, ABS, ASA/PC, PBT/ASA oder PUR-GF sein, wobei die Materialwahl von der speziellen Anwendung abhängt.

Bei dem in Fig. 1 gezeigten Dachelement ist die Form der Oberschale 12 so gewählt, dass sie im wesentlichen als ebene Platte ausgebildet ist. An ihrem hinteren Ende 20 ist die Oberschale 12 für den Kontakt mit einer Dichtung mit einer abgerundeten Kante versehen.

Die Unterschale 14 weist einen leicht gekrümmten plattenförmigen Basisbereich 22 auf, von welchem sich aus mehrere in etwa äquidistant angeordnete, in Dachquerrichtung verlaufende Distanzrippen 24 senkrecht nach oben erstrecken. Die Unterschale 14 ist als Spritzgussteil ausgebildet.

Die oberen Enden der Distanzrippen 24 sind leicht überstehend ausgebildet, um ein Verbinden mit der Oberschale 12 mittels Reibschweißen zu ermöglichen. Dabei werden in einem entsprechenden Werkzeug die Oberschale 12 und die Unterschale 14 periodisch im aufeinander gedrückten Zustand gegeneinander verschoben, wobei die dabei entstehende Reibungshitze ein Anschmelzen des Kontaktbereichs am oberen Ende der Distanzrippen 24 bewirkt, was zu einer Schweißverbindung in diesem Bereich zwischen der Oberschale 12 und der Unterschale 14 führt. Durch diesen Verbund wird über einen Sandwich-Effekt die erforderliche Steifigkeit des Dachelements 10 bei geringem Gewicht und einfacher Fertigung erzielt. Die zwischen den Rippen 24 gebildeten Hohlräume 26 können entweder leer gelassen werden oder sie können bei Bedarf mit einem Füllmaterial, beispielsweise einem Schaum, befüllt werden, um beispielsweise eine Geräuschdämmung zu erzielen.

Die vorliegende Erfindung ist jedoch nicht auf die beschriebene Reibverschweißung beschränkt, vielmehr können die beiden Schalen 12, 14 auch auf andere Weise miteinander fest verbunden werden, beispielsweise durch ein anderes Kunststoffschweißverfahren, eine Verklebung, eine Verklipsung oder auch durch einen Füllstoff mit Klebewirkung.

Bei der gezeigten Ausführungsform des Dachelements 10 sind die Schalen 12, 14 so ausgebildet, dass sie für eine Funktionsintegration sorgen, wodurch ansonsten erforderliche zusätzliche Teile eingespart werden können, was zu einer Kostenverringerung führt. So ist beispielsweise der vordere Bereich der Unterschale 14 als Wasserrinne 28 ausgebildet, welche in diesem Bereich eindringendes Wasser seitlich in in Dachlängsrichtung verlaufende Führungsschienen für das Dachelement 10 (nicht dargestellt) einleitet. Oberhalb der Wasserrinne 28 ist ein in Dachquerrichtung verlaufendes Dichtungselement 30 aus elastischem Material, z.B. Gummi oder Silikon, vorgesehen, welches im gezeigten Beispiel als Hohlkammerdichtung ausgebildet ist und einen sich nach hinten erstreckenden Befestigungsabschnitt 32 aufweist, welcher so zwischen der nach unten gezogenen Vorderkante 34 der Oberschale 12 und einem sich stegartig nach oben erstrekkenden Abschnitt 36 der Unterschale 14 zu liegen kommt, dass das Dichtungselement 30 mittels eines verdickten Endabschnitts gegen ein Herausrutschen nach vorn gesichert ist. Auf diese Weise wirken die Oberschale 12 und die Unterschale 14 im Zusammenspiel als Dichtungshalterung. Vorzugsweise erfolgt die Anbringung des Dichtelements 30 dadurch, dass das Dichtungselement 30 mit dem Befestigungsabschnitt 32 entsprechend im Bereich der Vorderkante 34 bzw. des Stegs 36 positioniert wird, bevor die Oberschale 12 und die Unterschale 14 miteinander verbunden werden (im gezeigten Beispiel mittels Reibschweißen). Dadurch kann das Dichtungselement 30 auf einfache Weise an dem Dachelement 10 montiert werden.

Das Dichtungselement 30 kann entweder zur Anlage an den vorderen Rand einer Dachöffnung oder zur Anlage an dem hinteren Rand 20 eines zweiten, im wesentlichen identischen Dachelements 10, ausgebildet sein, siehe Fig. 2. Im Bereich des Dichtungselements 30 eindringendes Wasser wird wie oben beschrieben von der Wasserrinne 28 aufgefangen und abgeleitet.

Das hintere Ende der Unterschale 14 ist als Abtropfkante 38 ausgebildet, um eventuell an der Unterseite des Dachelements 10 zurücklaufendes Wasser definiert abtropfen zu lassen, wobei gemäß Fig. 2 solches Wasser in die Wasserrinne 28 des benachbarten Dachelements 10 abtropft.

Bestimmte Bereiche der Unterschale 14 können als Sichtblenden ausgebildet sein, um bestimmte Bereiche der Dachmechanik abzudecken.

In der Nähe der Abtropfkante 38 ist ein Pufferelement 40 aus elastischem Material an der Unterseite der Unterschale 14 vorgesehen, an welches sich in der in Fig. 2 gezeigten Schließstellung der Dachelemente 10 ein entsprechendes Gegenstück 42 anlegt, welches von dem vorderen Rand 42 der Wasserrinne 28 des benachbarten Dachelements 10 gebildet wird. Das Pufferelement 40 ist vorgesehen, um die Höheneinstellung der Dachelemente 10 relativ zueinander sicherzustellen.

Die Unterseite der Unterschale 14 kann zum Fahrgastinnenraum hin sichtbar sein und ist deshalb mit einer entsprechenden Oberflächenqualität ausgestattet, was beispielsweise durch eine Stoffkaschierung, eine Narbung etc. erreicht werden kann.

Alternativ kann die Unterseite der Unterschale 14 von einer vorzugsweise gefärbten hinterspritzten Folie gebildet werden, wobei dann die Unterschale nicht als Spritzgussteil, sondern als hinterspritzte Folie wie die Oberschale im gezeigten Beispiel mit einem Verstärkungsmaterial, das dann auch die Rippen 24 bildet, ausgebildet ist. In diesem Fall kann unter Umständen die Oberschale 12 statt der Unterschale 14 als Spritzgussteil ausgebildet sein.

Die Erfindung ist nicht darauf beschränkt, dass die Folie hinterspritzt ist. Alternativ kann die Folie mit Verstärkungsmaterial hinterschäumt oder hinterpresst sein. Bei dem hinterschäumten Verstärkungsmaterial kann es sich beispielsweise um ein PU-System handeln, welches vorzugsweise glasfaserverstärkt ist. Bei dem hinterpressten Verstärkungsmaterial kann es sich um vorgefertigtes Plattenmaterial, z.B. um glasfaserverstärkte PP-Platten handeln.

Die verwendeten Abkürzungen sind wie folgt zu verstehen:

Polymethylmetacrylat (PMMA), Acrylnitril/Styrol/Acrylester (ASA), Polycarbonat (PC), Acrylnitril/Butadien/Styrol (ABS), Polybutylenterphtalat (PBT), Polyurethan (PU), Glasfaser (GF), Polypropylen (PP). Sind zwei solche Abkürzungen mittels eines Schrägstrichs verbunden, so bedeutet dies eine Mischung aus den beiden Materialien.

Mit "bezüglich des Dachelements nach außen weisende Seite" ist diejenige Seite der beiden Seiten des Oberteils bzw. des Unterteils gemeint, die nicht zu dem von dem Oberteil und dem Unterteil umschlossenen Hohlraum hinweist.

## Patentansprüche

1. Karosserie-Außenteil (10) für ein Fahrzeug, mit einem schalenartigen Oberteil (12) aus Kunststoff, dessen nach außen weisende Seite von einer Folie (16) gebildet wird, die mit einem Verstärkungsmaterial (18) hinterspritzt, hinterschäumt oder hinterpresst ist und mit einem Unterteil (14) aus Kunststoff zusammengesetzt ist, so dass das Oberteil (12) und das Unterteil (14) miteinander fest verbunden sind, **dadurch gekennzeichnet, dass** die nach unten weisende Seite des Unterteils (14) ebenfalls von einer Folie (16) gebildet wird, die mit einem Verstärkungsmaterial (18) hinterspritzt, hinterschäumt oder hinterpresst ist oder das Unterteil (14) als Spritzgussteil ausgebildet ist und dass zwischen Oberteil (12) und Unterteil (14) ein Hohlraum (26) gebildet wird.

2. Karosserie-Außenteil nach Anspruch 1, **dadurch gekennzeichnet, dass** das Karosserie-Außenteil als Dachelement (10) ausgebildet ist.

3. Karosserie-Außenteil nach Anspruch 2, **dadurch gekennzeichnet, dass** die Folie (16) eingefärbt ist.

4. Karosserie-Außenteil nach Anspruch 2 oder 3, **dadurch gekennzeichnet, dass** die Folie (16) mittels Extrusion hergestellt ist.

5. Karosserie-Außenteil nach einem der Ansprüche 2 bis 4, **dadurch gekennzeichnet, dass** die Folie (16) mit dem Verstärkungsmaterial (18) hinterspritzt ist.

6. Karosserie-Außenteil nach Anspruch 5, **dadurch gekennzeichnet, dass** die Folie (16) eine erste Deckschicht aus PMMA aufweist.

7. Karosserie-Außenteil nach Anspruch 6, **dadurch gekennzeichnet, dass** die Folie (16) eine zweite, eingefärbte Deckschicht aus Polymethylmetacrylat (PMMA) aufweist.

8. Karosserie-Außenteil nach einem der Ansprüche 5 bis 7, **dadurch gekennzeichnet, dass** die Folie (16) eine Trägerschicht aus Acrylnitril/ Styrol/Acrylester (ASA) oder Acrylnitril/Styrol/Acrylester / Polycarbonat (ASA/PC) aufweist.

9. Karosserie-Außenteil nach einem der Ansprüche 2 bis 4, **dadurch gekennzeichnet, dass** das hinterspritzte Verstärkungsmaterial (18) Acrylnitril/ Styrol/ Acrylester (ASA), Acrylnitril/Butadien/Styrol (ABS), Acrylnitril/ Styrol/Acrylester / Polycarbonat (ASA/PC), Polybutylenterphtalat/ Acrylnitril/ Styrol/Acrylester (PBT/ASA) oder Glasfaser-verstärktes Polyurethan (PUR-GF) oder eine Mischung daraus ist.

10. Karosserie-Außenteil nach einem der Ansprüche 2 bis 4, **dadurch gekennzeichnet, dass** die Folie (16) mit dem Verstärkungsmaterial (18) hinterschäumt ist und das Verstärkungsmaterial ein Polyurethan (PU) -System ist.

11. Karosserie-Außenteil nach Anspruch 10, **dadurch gekennzeichnet, dass** das Füllmaterial faserverstärkt, vorzugsweise glasfaserverstärkt, ist.

12. Karosserie-Außenteil nach einem der Ansprüche 2 bis 4, **dadurch gekennzeichnet, dass** die Folie (16) mit dem Verstärkungsmaterial (18) hinterpresst ist und es sich bei dem Verstärkungsmaterial (18) um vorgefertigtes Plattenmaterial handelt.

13. Karosserie-Außenteil nach Anspruch 12, **dadurch gekennzeichnet, dass** es sich bei dem Plattenmaterial um faserverstärkte Polypropylen (PP) - Platten handelt.

14. Karosserie-Außenteil nach einem der Ansprüche 2 bis 13, **dadurch gekennzeichnet, dass** eines der Teile (12) mit hinterspritzter Folie (16) ausgebildet ist, während das andere Teil (14) als Spritzgussteil ausgebildet ist.

15. Karosserie-Außenteil nach Anspruch 14, **dadurch gekennzeichnet, dass** das Oberteil (12) mit hinterspritzter Folie (16) ausgebildet ist, während das Unterteil (14) als Spritzgussteil ausgebildet ist

16. Karosserie-Außenteil nach einem der Ansprüche 2 bis 15, **dadurch gekennzeichnet, dass** eines der beiden Teile (14) Distanzrippen (24) aufweist, deren Enden mit dem anderen Teil (12) verbunden sind.

17. Karosserie-Außenteil nach einem der Ansprüche 2 bis 16, **dadurch gekennzeichnet, dass** die beiden Teile (12, 14) miteinander verschweißt sind.

18. Karosserie-Außenteil nach Anspruch 17, **dadurch gekennzeichnet, dass** die beiden Teile (12, 14) mittels Reibschweißen miteinander verbunden sind.

19. Karosserie-Außenteil nach Anspruch 18, **dadurch gekennzeichnet, dass** eines der beiden Teile (14) Distanzrippen (24) aufweist, deren Ende mit dem anderen Teil (12) mittels Reibschweißen verbunden ist.

20. Karosserie-Außenteil nach einem der Ansprüche 2 bis 19, **dadurch gekennzeichnet, dass** das Dachelement (10) verstellbar ist.

21. Karosserie-Außenteil nach Anspruch 20, **dadurch gekennzeichnet, dass** es sich bei dem Dachelement (10) um einen Deckel oder eine Lamelle eines öffnungsfähigen Fahrzeugdaches handelt.

22. Karosserie-Außenteil nach Anspruch 21, **dadurch gekennzeichnet, dass** in das Unterteil (14) eine Wasserrinne (28) integriert ist.

23. Karosserie-Außenteil nach Anspruch 22, **dadurch gekennzeichnet, dass** die Wasserrinne (28) im Bereich der Vorderkante (42) des Dachelements (10) vorgesehen ist und ausgebildet ist, um Wasser seitlich in dachfeste Führungsschienen für das Dachelement (10) abzuleiten.

24. Karosserie-Außenteil nach einem der Ansprüche 21 bis 23, **dadurch gekennzeichnet, dass** das Unterteil (14) mit einer Abtropfkante (38) versehen ist.

25. Karosserie-Außenteil nach einem der Ansprüche 21 bis 24, **dadurch gekennzeichnet, dass** das Oberteil (12) und das Unterteil (14) so ausgebildet sind, dass sie im verbundenen Zustand ein Dichtungselement (30) für das Dachteil (10) zwischen sich halten.

26. Karosserie-Außenteil nach einem der Ansprüche 21 bis 25, **dadurch gekennzeichnet, dass** eines der beiden Teile (14) mit einem elastischen Pufferelement (40) versehen ist, welches für Zusammenwirken mit einem benachbarten Dachelement (10) vorgesehen ist, um die relative Höheneinstellung der beiden Dachelemente zueinander zu bewirken.

27. Karosserie-Außenteil nach einem der Ansprüche 2 bis 26, **dadurch gekennzeichnet, dass** der Hohlraum (26) mindestens zum Teil mit einem Füllmaterial gefüllt ist.

28. Karosserie-Außenteil nach Anspruch 27, **dadurch gekennzeichnet, dass** es sich bei dem Füllmaterial um einen Schaum handelt.

## Claims

1. External body part (10) for an automobile, having a shell-like upper part (12) of plastic, whose outwardly pointing side is formed by a film (16) which is laminated with a reinforcing material (18) in an in-mould injection moulding, foam-backing or compression moulding process and is combined with a lower part (14) of plastic, so that the upper part (12) and the lower part (14) are firmly connected to each other, **characterized in that** the downwardly pointing part of the lower part (14) is likewise formed by a film (16) which is laminated with a reinforcing material (18) in an in-mould injection moulding, foam-backing or compression moulding process, or the lower part (14) is formed as an injection moulding and a hollow space (26) is formed between the upper part (12) and lower part (14).

2. External body part according to Claim 1, **characterized in that** the external body part is designed as a roof element (10).

3. External body part according to Claim 2, **characterized in that** the film (16) is coloured.

4. External body part according to Claim 2 or 3, **characterized in that** the film (16) is produced by means of extrusion.

5. External body part according to one of Claims 2 to 4, **characterized in that** the film (16) is laminated with the reinforcing material (18) in an in-mould injection moulding process.

6. External body part according to Claim 5, **characterized in that** the film (16) has a first top layer of PMMA.

7. External body part according to Claim 6, **characterized in that** the film (16) has a second, coloured top layer of polymethylmethacrylate (PMMA).

8. External body part according to one of Claims 5 to 7, **characterized in that** the film (16) has a carrier layer of acrylonitrile/styrene/acrylate (ASA) or acrylonitrile/styrene/acrylate/polycarbonate (ASA/PC).

9. External body part according to one of Claims 2 to 4, **characterized in that** the in-mould laminated reinforcing material (18) is acrylonitrile/styrene/ acrylate (ASA), acrylonitrile/butadiene/styrene (ABS), acrylonitrile/styrene/acrylate/polycarbonate (ASA/PC), polybutylene terephthalate/acrylonitrile/styrene/ acrylate (PBT/ASA) or glass-fibre-reinforced polyurethane (PUR-GF) or a mixture thereof.

10. External body part according to one of Claims 2 to 4, **characterized in that** the film (16) is laminated with the reinforcing material (18) in an in-mould injection moulding process and the reinforcing material is a polyurethane (PU) system.

11. External body part according to Claim 10, **characterized in that** the filler material is fibre-reinforced, preferably glass-fibre-reinforced.

12. External body part according to one of Claims 2 to 4, **characterized in that** the film (16) is laminated with the reinforcing material (18) in an in-mould compression moulding process and the reinforcing material (18) is prefabricated panel material.

13. External body part according to Claim 12, **characterized in that** the panel material is fibre-reinforced polypropylene (PP) panels.

14. External body part according to one of Claims 2 to 13, **characterized in that** one of the parts (12) is formed with in-mould laminated film (16), while the other part (14) is formed as an injection moulding.

15. External body part according to Claim 14, **characterized in that** the upper part (12) is formed with in-mould laminated film (16), while the lower part (14) is formed as an injection moulding.

16. External body part according to one of Claims 2 to 15, **characterized in that** one of the two parts (14) has spacer ribs (24), whose ends are connected to the other part (12).

17. External body part according to one of Claims 2 to 16, **characterized in that** the two parts (12, 14) are welded to each other.

18. External body part according to Claim 17, **characterized in that** the two parts (12, 14) are connected to each other by friction welding.

19. External body part according to Claim 18, **characterized in that** one of the two parts (14) has spacer ribs (24), whose ends are connected to the other part (12) by means of friction welding.

20. External body part according to one of Claims 2 to 19, **characterized in that** the roof element (10) is displaceable.

21. External body part according to Claim 20, **characterized in that** the roof element (10) is a panel or a louvre of a vehicle roof that can be opened.

22. External body part according to Claim 21, **characterized in that** a water channel (28) is integrated into the lower part (14).

23. External body part according to Claim 22, **characterized in that** the water channel (28) is provided in the region of the front edge (42) of the roof element (10) and is designed to lead water off laterally into roof-mounted guide rails for the roof element (10).

24. External body part according to one of Claims 21 to 23, **characterized in that** the lower part (14) is provided with a drip edge (38).

25. External body part according to one of Claims 21 to 24, **characterized in that** the upper part (12) and the lower part (14) are designed such that when they are assembled they hold between them a seal element (30) for the roof part (10).

26. External body part according to one of Claims 21 to 25, **characterized in that** one of the two parts (14) is provided with an elastic buffer element (40), which is provided to interact with an adjacent roof element (10) in order to effect the relative vertical adjustment of the two roof elements in relation to each other.

27. External body part according to one of Claims 2 to 26, **characterized in that** the hollow space (26) is at least partly filled with a filling material.

28. External body part according to Claim 27, **characterized in that** the filling material is a foam.

## Revendications

1. Élément extérieur (10) d'une carrosserie d'automobile, avec une partie supérieure (12) du genre coque en matière plastique dont le côté tourné vers l'extérieur est formé par une feuille (16) qui est surmoulée par injection, moussage ou compression d'un matériau de renforcement (18) et qui est réunie avec une partie inférieure (14) en matière plastique, de sorte que la partie supérieure (12) et la partie inférieure (14) sont fixement reliées entre elles, **caractérisé en ce que** le côté de la partie inférieure (14) qui est tourné vers le bas est également formé par une feuille (16) qui est surmoulée par injection, moussage ou compression d'un matériau de renforcement (18), ou bien la partie inférieure (14) est réalisée sous forme de pièce moulée par injection, et **en ce qu'**une cavité (26) est formée entre la partie supérieure (12) et la partie inférieure (14).

2. Élément extérieur de carrosserie selon la revendication 1, **caractérisé en ce que** l'élément extérieur de carrosserie est conçu comme élément de toit (10).

3. Élément extérieur de carrosserie selon la revendication 2, **caractérisé en ce que** la feuille (16) est teintée.

4. Élément extérieur de carrosserie selon la revendication 2 ou 3, **caractérisé en ce que** la feuille (16) est fabriquée par extrusion.

5. Élément extérieur de carrosserie selon l'une des revendications 2 à 4, **caractérisé en ce que** la feuille (16) est surmoulée du matériau de renforcement (18) par injection.

6. Élément extérieur de carrosserie selon la revendication 5, **caractérisé en ce que** la feuille (16) présente une première couche de recouvrement en PMMA.

7. Élément extérieur de carrosserie selon la revendication 6, **caractérisé en ce que** la feuille (16) présente une deuxième couche de recouvrement teintée en polyméthacrylate de méthyle (PMMA).

8. Élément extérieur de carrosserie selon l'une des revendications 5 à 7, **caractérisé en ce que** la feuille (16) présente une couche porteuse en acrylonitrile-styrène-acrylester (ASA) ou en acrylonitrile-styrène-acrylester/polycarbonate (ASA/PC).

9. Élément extérieur de carrosserie selon l'une des revendications 2 à 4, **caractérisé en ce que** le matériau de renforcement (18) surmoulé par injection est de l'acrylonitrile-styrène-acrylester (ASA), de l'acrylonitrile-butadiène-styrène (ABS), de l'acrylonitrile-styrène-acrylester/polycarbonate (ASA/PC), du polybutylène-téréphtalate/acrylonitrile-styrène-acrylester (PBT/ASA) ou du polyuréthane renforcé de fibres de verre (PUR-GF), ou un mélange de ces matériaux.

10. Élément extérieur de carrosserie selon l'une des revendications 2 à 4, **caractérisé en ce que** la feuille (16) est surmoulée du matériau de renforcement (18) par moussage, et le matériau de renforcement est un système de polyuréthane (PU).

11. Élément extérieur de carrosserie selon la revendication 10, **caractérisé en ce que** le matériau de remplissage est renforcé de fibres, de préférence de fibres de verre.

12. Élément extérieur de carrosserie selon l'une des revendications 2 à 4, **caractérisé en ce que** la feuille (16) est surmoulée du matériau de renforcement (18) par compression, et le matériau de renforcement (18) est un matériau préfabriqué en plaques.

13. Élément extérieur de carrosserie selon la revendication 12, **caractérisé en ce que** le matériau en plaques consiste en des plaques de polypropylène (PP) renforcé de fibres.

14. Élément extérieur de carrosserie selon l'une des revendications 2 à 13, **caractérisé en ce qu'**une (12) des parties est réalisée avec une feuille (16) surmoulée, tandis que l'autre partie (14) est réalisée sous forme de pièce moulée par injection.

15. Élément extérieur de carrosserie selon la revendication 14, **caractérisé en ce que** la partie supérieure (12) est réalisée avec une feuille (16) surmoulée, tandis que la partie inférieure (14) est réalisée sous forme de pièce moulée par injection.

16. Élément extérieur de carrosserie selon l'une des revendications 2 à 15, **caractérisé en ce qu'**une (14) des deux parties présente des nervures d'écartement (24) dont les extrémités sont reliées à l'autre partie (12).

17. Élément extérieur de carrosserie selon l'une des revendications 2 à 16, **caractérisé en ce que** les deux parties (12, 14) sont mutuellement reliées par soudage.

18. Élément extérieur de carrosserie selon la revendication 17, **caractérisé en ce que** les deux parties (12, 14) sont mutuellement reliées par soudage par friction.

19. Élément extérieur de carrosserie selon la revendication 18, **caractérisé en ce qu'**une (14) des deux parties présente des nervures d'écartement (24) dont les extrémités sont reliées à l'autre partie (12) par soudage par friction.

20. Élément extérieur de carrosserie selon l'une des revendications 2 à 19, **caractérisé en ce que** l'élément de toit (10) est réglable.

21. Élément extérieur de carrosserie selon la revendication 20, **caractérisé en ce que** l'élément de toit (10) est un panneau ou une lamelle d'un toit ouvrant de véhicule.

22. Élément extérieur de carrosserie selon la revendication 21, **caractérisé en ce qu'**une gouttière (28) est intégrée dans la partie inférieure (14).

23. Élément extérieur de carrosserie selon la revendication 22, **caractérisé en ce que** la gouttière (28) est prévue dans la région du bord avant (42) de l'élément de toit (10) et est conçue pour évacuer l'eau sur les côtés dans des glissières solidaires du toit pour l'élément de toit (10).

24. Élément extérieur de carrosserie selon l'une des revendications 21 à 23, **caractérisé en ce que** la partie inférieure (14) est pourvue d'un bord d'égouttage (38).

25. Élément extérieur de carrosserie selon l'une des revendications 21 à 24, **caractérisé en ce que** la partie supérieure (12) et la partie inférieure (14) sont conçues de telle sorte que, dans l'état relié, elles maintiennent entre elles un élément d'étanchéité (30) pour l'élément de toit (10).

26. Élément extérieur de carrosserie selon l'une des revendications 21 à 25, **caractérisé en ce qu'**une (14) des deux parties est pourvue d'un élément amortisseur élastique (40) qui est prévu pour coopérer avec un élément de toit voisin (10) afin de produire le réglage en hauteur relatif des deux éléments de toit l'un par rapport à l'autre.

27. Élément extérieur de carrosserie selon l'une des revendications 2 à 26, **caractérisé en ce que** la cavité (26) est remplie au moins pour partie d'un matériau de remplissage.

28. Élément extérieur de carrosserie selon la revendication 27, **caractérisé en ce que** le matériau de remplissage est une mousse.
